# EUROPEAN PATENT SPECIFICATION

(11) **EP 2 031 570 B1**
(45) Date of publication and mention of the grant of the patent: **13.02.2013**
(21) Application number: 06766936.6
(22) Date of filing: 20.06.2006
(51) Int. Cl.: G08G 1/0968, G01C 21/34, G08G 1/005, G09B 29/00, G06Q 50/00

(54) **ROUTE SEARCH SYSTEM, ROUTE SEARCH SERVER, TERMINAL, AND ROUTE SEARCH METHOD**
ROUTENSUCHSYSTEM, ROUTENSUCHSERVER, ENDGERÄT UND ROUTENSUCHVERFAHREN
SYSTEME DE RECHERCHE D'ITINERAIRE, SERVEUR DE RECHERCHE D'ITINERAIRE, TERMINAL ET PROCEDE DE RECHERCHE D'ITINERAIRE

(43) Date of publication of application: 04.03.2009
(73) Proprietor: Navitime Japan Co., Ltd., Tokyo 107-0062 (JP)
(72) Inventor: TANIYAMA, Takashi, Minato-ku, Tokyo 107-0062 (JP); ONISHI, Keisuke, Minato-ku, Tokyo 107-0062 (JP); KIKUCHI, Shin, Minato-ku, Tokyo 107-0062 (JP); SAKAMOTO, Hiroshi, Minato-ku, Tokyo 107-0062 (JP)
(74) Representative: HOFFMANN EITLE
(86) International application number: PCT/JP2006/312275
(87) International publication number: WO 2007/148378

(56) References cited:
- EP-A1- 1 035 403
- EP-A2- 1 324 291
- JP-A- 2001 014 297
- JP-A- 2003 114 135
- JP-A- 2003 227 732
- JP-A- 2005 265 551
- JP-A- 2006 058 089

## Description

### TECHNICAL FIELD

The present invention relates to a route search system for searching for an optimal route, a candidate route, and other guidance routes for participating in a single event of a multi-hosted event by walking and using transportation facilities in the case that the same kind of event is held in a plurality of locations and in a plurality of time periods such as a movie showing, for example.

In a route search system such as that described above, the present invention relates to a route search system for performing a route search in which the hosting location of each event is set as an event meeting place node having positional information, an event is connected as an event virtual node that does not have positional information to the event meeting place node in which the event will be hosted, the event meeting place node and the event virtual node are connected with each other using a link based on the event hosting time, and the event meeting place node is connected to route search network data that includes traffic network data.

### BACKGROUND ART

Navigation devices and navigation systems are conventionally known for searching for a route from a desired departure point to a destination using map data and road data and providing guidance to a user. Such navigation devices and navigation systems that are used in actual practice include car navigation devices mounted in a car and used for guiding a driver along a route, communication-type navigation systems that send a route search request to a route search server using a mobile phone as a navigation terminal and that receive the results of the search to receive route guidance, as well as other devices and systems.

In particular, a communication-type navigation system is a system in which a mobile phone or another mobile terminal is used as a navigation terminal, and is also used as a navigation system for a pedestrian. There are also navigation systems for a pedestrian which include navigation systems that preferably add a route guidance function including transportation facilities and which have a function for accumulating, in addition to walk route search and guidance, operating time schedule data and the route of a transportation facility in a route search server and adding to the search and guidance of a walk route a route from a desired departure station to a desired destination station. There are also transportation guidance systems for receiving the distribution of and displaying routes and timetables of transportation facilities, available trains, and other information from an information distribution server without searching for a walk route.

A route search device and route search method used in a general navigation device and communication navigation system are disclosed in, e.g., Patent Document 1 described below (Japanese Laid-open Patent Application No. 2001-165681). The navigation system is configured to send departure point and destination information from a mobile navigation terminal to an information distribution server, and to search for and provide guidance along a route matched to the search conditions from the data of road networks and traffic networks in the information distribution server. Movement means, e.g., walking, car, a combination of walking and railroad, or the like from a departure point to a destination is used as a search condition, and a route is searched using this as a single search condition.

The information distribution server is provided with the road (route) of the map data as the connection points, the position of inflection points as nodes, the route that connects each node as a link, and the cost information (distance and required time) of all the links as a database. The information distribution server can reference a database, sequentially search for links that reach from the node of the departure point to the node of the destination, and provide the shortest route to a mobile navigation terminal by following the nodes and links having the smallest link cost information to provide a guidance route. A method referred to as the label determination method or the Dijkstra method is used as the method of such a route search. A route search method using the Dijkstra method is also disclosed in Patent Document 1.

The route search system for searching for a route that makes use of transportation facilities is composed of an operation timetable database in which the operation timetable of transportation facilities has been formed into a database on the basis of the departure time, departure point, destination, arrival time, and other route search conditions specified by the user, and of database in which the traffic network has been formed into a database on the basis of the operation timetable database. The system is configured so as to reference these databases, to sequentially follow as the route each usable transportation means (individual trains and route buses) that connects the departure point and the destination, including changes (transfers), and to present one or a plurality of guidance route candidates (departure station, destination station, route [bus], train, and other transportation means) that match the route search conditions. The required time, number of changes, fare, and other conditions can generally be specified as route search conditions.

A guidance system is also provided as a system for carrying out searches and providing guidance related to transportation facilities, wherein a mobile phone or another terminal device can connect to an information distribution server for providing guidance related to route information and timetable information of transportation facilities, specify a desired departure station, departure time, destination station, or the like, and receive and display information distribution of boardable lines, trains, trains, and other transportation means on the terminal device. Generally, when this kind of utilization is carried out from the terminal unit, a configuration is used in which a URL (Uniform Resource Locator), a domain name, or other address for specifying the location in which the desired information download exists is inputted, and the information distribution server (information site) specified by the address is accessed and the desired information is downloaded.

The data for a route search in a navigation system or the like for searching for a route and providing route guidance using transportation facilities uses as nodes the stations of the transportation facilities in the same manner as the road network data in a navigation system for a pedestrian or an onboard navigation system, and, in addition to data in which the stations have been networked with each other as bidirectional links, data is also added in which the operation time and required time of each link is used as link cost data for each transportation means operated on each transportation line. Furthermore, there are systems in which freight data can be added and guidance provided together with the fare of the guidance route thus searched.

Therefore, guidance route data distributed to a terminal device includes buses, trains, trains, and their timetables for providing guidance related to boarding, and lines and routes from a departure point to a destination, which are route search conditions specified by the user. Operating timetables, so-called station-posted timetables that are displayed at the station, or other timetables are directly sent or the required portions are formatted into display data or another format for display on a screen and distributed to a terminal device. The guidance route data, the operating timetable, or the station-posted timetable is displayed in the terminal device, and the route and transportation means to be boarded can be confirmed.

A route search method for performing a route search using transportation facilities is disclosed in, e.g., Patent Document 2 (Japanese Laid-open Patent Application No. 2000-258184) described below as a traffic network route search method. The traffic network route search method disclosed in Patent Document 2 expresses a route from a departure point to a destination point, and is a traffic network in which points are nodes and areas between points are links, and is also a traffic network route search method for performing a search under minimal cost conditions using the label determination method with the aid of a computer.

In this method, the direct distance from the departure point and the destination point to the stations of the transportation facilities to be used, and the direct distance from the destination point to the station of the transportation facilities to be used are calculated as the route from the departure point and the destination point to the station of the transportation facilities to be used by making use of the latitude and longitude information. The average cost is calculated using the direct distance as a variable, the stations of the all the utilized transportation facilities included in the cost range specified by the average cost are obtained, and a walking route is determined. The walking route thus obtained is incorporated into the traffic network route of the transportation facilities to express the overall traffic network, and a search is carried out under the costs conditions obtained using the label determination method with the aid of a computer.

The use of a route search system that combines walking and transportation facilities allows the user to obtain as a guidance route the result of searching for the optimal routes overall in relation to moving by walking from a desired departure point (e.g., home) to the nearest local station, to moving by using transportation facilities to the nearest station to the destination (e.g., a cinema), and to furthermore moving by walking from the nearest station to the destination (cinema). In the case that a cinema is used as a destination, it is natural to assume the purpose is to watch a movie.

A system that generally provides information related to a movie or another event is disclosed as a "server device' in, e.g., Patent Document 3 described below (Japanese Laid-open Patent Application No. 2001-325514). The server device disclosed in Patent Document 3 is one that can distribute movie introduction information or the like of a movie being shown in a desired area or genre, and is configured to receive area information transmitted from a mobile terminal device and to transmit listing information of movie titles for the area information to the mobile terminal device.

Information showing any of the movie titles among the listed information transmitted from the mobile terminal device is received, and the movie introduction information of the movie titles shown in the information thus received is transmitted to the mobile terminal device. The user can thereby receive distribution of movie introduction information within a desired area from the server device.

In the case that a movie is to be viewed, the same movie is shown at a plurality of cinemas when the newest recently released movie is made available to the public. In this case, the showing time is not the same at all the cinemas and it is common that the showing time for each cinema is different. Therefore, when the cinema is used as the destination and a route is searched using a route search system, the user must request a route search using the arrival time at a destination as a condition while considering the showing start time of the movie in addition to specifying a cinema as the destination.

EP 1 324 291 A2 relates to an event finder according to the preamble of claim 1 with a navigation system and display method thereof. The system retrieves information about where a certain movie is shown and sorts the cinemas by distance by calculating the route to each cinema. The system then calculates the arrival time and the waiting time to the next showing of the movie for all cinemas.
[Patent Document 1]: Japanese Laid-open Patent Application No. 2001-165681 (FIGS. 1 and 2)
[Patent Document 2]: Japanese Laid-open Patent Application No. 2000-258184 (FIGS. 4 and 7)
[Patent Document 3]: Japanese Laid-open Patent Application No. 2001-325514 (FIGS. 1 and 6)

### DISCLOSURE OF THE INVENTION

### [Problems the Invention Is Intended To Solve]

As described above, in the case that a movie is to be viewed, the same movie is shown at a plurality of cinemas when the newest recently released movie is made available to the public. In this case, the showing time is not the same at all the cinemas and it is common that the showing time for each cinema is different. Therefore, when the cinema is used as the destination and a route is searched using a route search system, the user must request a route search using the arrival time at a destination as a condition while considering the showing start time of the movie in addition to specifying a cinema as the destination. A server device such as that disclosed in Patent Document 3 described above provides information related to the movie, but there is a problem in that the user must determine whether to select which cinema at which to view the target movie or to decide the type of route to be used as the route to the cinema.

In the route search system disclosed in Patent Document 2, the physical position of the cinema as the destination is used as a node, and an optimal route or a plurality of selectable routes that involve arriving at the node by walking or by using transportation facilities can be searched, but there is a fundamental problem in that a route search that takes the showing time of the movie into account is not possible. Accordingly, a need arises to separately search for a route using each of the cinemas as the destination in order to compare and consider the route to a plurality of cinemas in the local in which the same movie is being shown.

In the case that a route to a cinema is searched using a route search system that combines the use of walking and transportation facilities, it is often the experience that the results of the route search and the guidance of the optimal route to the cinema set as the destination are received, but even if one were to go to the corresponding cinema, the showing at that time is already sold out and a seat cannot be obtained. In such a case, the same movie is being shown at another cinema in the local area and there may be an open seat at that cinema. In such a case, there is a problem in that a plurality of cinemas must be set as the destination and a route must be searched to each cinema as described above in the route search system disclosed in Patent Document 2.

Such a problem is not limited to viewing a movie, and the problem also occurs when a route is searched for participating in a single event among a multi-hosted event by walking and by using transportation facilities, in the case that the same kind of event is held at a plurality of locations and in a plurality of time periods. For example, there are beauty salons, hospitals, restaurants, and other facilities that provide substantially the same kind of service in a plurality of locations, and a time period in which the service is provided can be determined by reservation. The same problem occurs in a route search for receiving a service in which unreserved open time periods are set in a database.

In the present specification, the case in which the same kind of event or service is held in a plurality of locations and a plurality of time periods is referred to as a "multi-hosted event," and an object of the present invention is to provide a route search system for searching for an optimal route, a candidate route, and other guidance routes for participating in a single event of a multi-hosted event by walking and using transportation facilities.

The inventor of the present invention, after thoroughgoing research to solve the problems described above, perfected the present invention having found that the problems described above can be solved by using the venue of the event as an event meeting place node having positional information and connecting the event as the event virtual node which does not have positional information to the event meeting place node where the event will be held, making a connection from the event meeting place node to the event virtual node using a plurality of links based on the different times of an event, and connecting the event meeting place node to route search network data that includes traffic network data to perform a route search.

In other words, an object of the present invention is to provide a route search system, a route search server, a terminal device, and a route search method that can search for a guidance route for participating in a single event of the same type held in a plurality of locations and in a plurality of time periods in a simple manner without setting a plurality of locations.

### [Means for Solving the Abovementioned Problems]

The object of the present application is solved by the features of the independent claims.

Preferred empbodiments are described in the dependent claims

In order to solve the problems described above, a first example is a route search system for setting a desired departure point and searching for a route for participating in one event of the same kind held in a plurality of locations and in a plurality of time periods, the route search system characterized in that
the route search system comprises route search network data for searching for a route that makes use of walking and transportation facilities, route searching means, network data editing means, and event data provided with a venue and time of the event;
the network data editing means connects the venue of the event as an event meeting place node having positional information to the route search network data, registers the event as an event virtual node that does not have positional information, and makes a connection from the event meeting place node to the event virtual node using a plurality of links based on the different times of an event; and the route searching means searches for a guidance route from the departure point using the corresponding event virtual node as the destination and provides guidance to a corresponding event and the venue of the event in the case that a specific event is specified from among the events using a desired point as a departure point and a route search is requested.

In the first example, it is preferred that the route searching means be configured so as to search for an optimal route or a plurality of candidate routes including the optimal route as a guidance route from the departure point to an event virtual node, which is the destination.

In the first example, it is preferred that a link based on the time of the event be expressed in a format of a transportation timetable showing departure from the event meeting place node at the start time of the event and the arrival at the event virtual node at the end time of the event.

In the first example, a configuration is possible in which the event data is acquired from an event information-providing server for providing information related to a corresponding event via a network.

In the first example, a configuration is possible in which the network data editing means registers the category of the event as a category virtual node that does not have positional information, and makes a connection from the event virtual node to the category virtual node using a link having a fixed cost, the event being placed into a category; and the route searching means searches for a guidance route from the departure point using the corresponding category virtual node as the destination and provides guidance to a corresponding event and the venue of the event in the case that a specific category is specified from among the categories using a desired point as a departure point and a route search is requested.

In the first example, it is preferred that the route searching means be configured to search for an optimal route or a plurality of candidate routes including the optimal route as a guidance route from the departure point to a category virtual node, which is the destination, and provide guidance to a corresponding event and the venue of the event in the case that a specific category is specified from among the categories using a desired point as a departure point and a route search is requested.

In the first example, it is preferred that the route searching means be configured to search for an optimal route or a plurality of candidate routes including the optimal route as a guidance route from the departure point to a category virtual node, which is the destination, and provide guidance to a corresponding event and the venue of the event.

A second example is a route search server comprising route search network data for searching for a route using walking and transportation facilities, and route search means, being connected to a terminal device for setting the departure point via a network, the route search server characterized in that
the route search server comprises network data editing means and event data provided with the venue and time of the event, in order to select a single event of a same type held at a plurality of locations and a plurality of time periods, set a desired departure point, and search for a route for participating in the event;
the network data editing means connects the venue of the event as an event meeting place node having positional information to the route search network data, registers the

event as an event virtual node that does not have positional information, and makes a connection from the event meeting place node to the event virtual node using a plurality of links based on the different times of an event; and the route searching means searches for a guidance route from the departure point using the event virtual node as the destination and provides to the terminal device guidance to a corresponding event and the venue of the event in the case that a specific event is specified from among the events using a desired point as a departure point and a route search is requested.

In the second example, it is preferred that the route searching means be configured to search for an optimal route or a plurality of candidate routes including the optimal route as a guidance route from the departure point to an event virtual node, which is the destination.

In the second example, it is preferred that a link based on the time of the event be expressed in a format of a transportation timetable showing departure from the event meeting place node at the start time of the event and the arrival at the event virtual node at the end time of the event.

In the second example, a configuration is possible in which the event data is acquired from an event information-providing server for providing information related to a corresponding event via a network.

In the second example, a configuration is possible in which the network data editing means registers the category of the event as a category virtual node that does not have positional information, and makes a connection from the event virtual node to the category virtual node using a link having a fixed cost, the event being placed into a category; and the route searching means searches for a guidance route from the departure point using the corresponding category virtual node as the destination and provides guidance to a corresponding event and the venue of the event in the case that a specific category is specified from among the categories using a desired point as a departure point and a route search is requested.

In the second example, it is preferred that the route searching means be further configured to search for an optimal route or a plurality of candidate routes including the optimal route as a guidance route from the departure point to a category virtual node, which is the destination, and provide guidance to a corresponding event and the venue of the event.

A third example is a route search method in a route search system for setting a desired departure point and searching for a route for participating in one event of the same kind held in a plurality of locations and in a plurality of time periods, the route search method characterized in that
the route search system has route search network data for searching for a route that makes use of walking and transportation facilities, route searching means, network data editing means, and event data provided with a venue and time of the event;
the network data editing means has a step for connecting the venue of the event as an event meeting place node having positional information to the route search network data, a step for registering each of the events as an event virtual node that does not have positional information and making a connection from the event meeting place node to the event virtual node using a plurality of links based on the different times of an event; and a step in which the route searching means searches for a guidance route from the departure point using the corresponding event virtual node as the destination in the case that a specific event is specified from among the events using a desired point as a departure point; and
guidance is provided to a corresponding event and the venue of the event.

In the third example, it is preferred that the step in which the route searching means searches for a guidance route be configured so as to include processing for searching for an optimal route or a plurality of candidate routes including the optimal route from the departure point to an event virtual node, which is the destination.

In the third example, it is preferred that the method be configured so as to further comprise:
a step in which the network data editing means registers the category of the event as a category virtual node that does not have positional information, and makes a connection from the event virtual node to the category virtual node using a link having a fixed cost, the event being placed into a category;
a step in which the route searching means searches for a guidance route from the departure point using the corresponding category virtual node as the destination in the case that a specific category is specified from among the categories using a desired point as a departure point and a route search is requested; and
guidance provided to the corresponding event and the venue of the event.

In the third example, it is preferred that the step in which the route searching means searches for a guidance route be configured so as to include processing for searching for an optimal route or a plurality of candidate routes including the optimal route from the departure point to an event virtual node, which is the destination.

A fourth example is a terminal device for searching for a route for participating in one event of the same kind held in a plurality of locations and in a plurality of time periods, and which comprises route search network data, route search means, network data editing means, and event data provided with venue and time of the event, wherein
the network data editing means connects the venue of the event as an event meeting place node having positional information to the route search network data, registers the event as an event virtual node that does not have positional information, and makes a connection from the event meeting place node to the event virtual node using a plurality of links based on the different times of an event; and the route searching means connects via a network to a route search server for searching for a guidance route from the departure point using the corresponding event virtual node as the destination in the case that a departure point and a specific event are specified from a terminal device from among the events and a route search is requested, the terminal device
characterized in that
the terminal device is provided with means for specifying a desired departure point and event and sending a route search request to the route search server.

In the fourth example, it is preferred that the network data editing means be configured to register the category of the event as a category virtual node that does not have positional information, and make a connection from the event virtual node to the category virtual node using a link having a fixed cost, the event being placed into a category, and the route searching means be connected to a route search server for searching for a guidance route from the departure point using the corresponding category virtual node as the destination, the terminal device characterized in that the terminal device is further provided with means for specifying a desired departure point and category and sending a route search request to the route search server.

### [Effect of the Invention]

In the first example, a route search system comprises route search network data for searching for a route that makes use of walking and transportation facilities, route searching means, network data editing means, and event data provided with a venue and time of the event;
the network data editing means connects the venue of the event as an event meeting place node having positional information to the route search network data, registers the event as an event virtual node that does not have positional information, and makes a connection from the event meeting place node to the event virtual node using a plurality of links based on the different times of an event; and
the route searching means searches for a guidance route from the departure point using the event virtual node as the destination and provides guidance to a corresponding event and the venue of the event in the case that a specific event is specified from among the events using a desired point as a departure point and a route search is requested.

In accordance with such a configuration, the same kind of event, such as a movie showing, held in a plurality of locations and in a plurality of time periods is used as an event meeting place node having positional information of the venue where the event will be held, and each event is used as an event virtual node that does not having positional information connected to the event meeting place node where the event is to be held. A connection is made therebetween by a plurality of links based on the different times of the events, and since a connection is made to a route search network, the event can be handled in the same manner as a node in which ordinary transportation facilities are used. An event can be specified and an optimal route or candidate route from a desired departure point can be searched in a simple manner using the specified event as the destination.

In the second example, a route search server that constitutes the route search system according to the first example can be provided. In the third example, a route search method for implementing the route search system according to the first example can be provided. In the fourth example, a terminal device constituting the route search system according the first example can be provided.

### BRIEF DESCRIPTION OF THE DRAWINGS

FIG. 1 is a system block diagram showing the route search system according to an embodiment of the present invention;
FIG. 2 is a block diagram showing a detailed configuration of the route search system according to an embodiment of the present invention;
FIG. 3 is a diagram showing an example of a data configuration of a database for accumulating information (event data) related to the same kinds of events held in a plurality of locations and in a plurality of time periods;
FIG. 4 is a schematic diagram showing a conceptualization of road network data;
FIG. 5 is a schematic diagram showing a conceptualization of traffic network data;
FIG. 6 is a schematic diagram showing a state in which an event meeting place node is connected to route search network data;
FIG. 7 is a schematic diagram showing a conceptualization of the connection between the event meeting place node and the event virtual node
FIG. 8 is a schematic diagram showing a conceptualization in which the category of an event is connected to the event virtual node of the corresponding category as a category virtual node;
FIG. 9 is a schematic diagram showing the result of selecting an event and searching for a route, using the point S of FIG. 7 as the starting point; and
FIG. 10 is a schematic diagram showing a conceptualization of a route search in which an event virtual node is used as a transit point, and a point having a separate actual position beyond the transit point is used as the destination.

### [Key to Symbols]

- 10: navigation system
- 12: network
- 20: terminal device
- 21: control means
- 22: communication means
- 23: positioning means
- 24: display means
- 25: guidance route data storage means
- 26: distribution request editing means
- 27: operation and input means
- 30: route search server
- 31: control means
- 32: route guidance means
- 33: route search means
- 34: communication means
- 35: route search network data
- 36: road network data
- 37: traffic network data
- 38: network data editing means
- 39: event data
- 40: application link means
- 50: information distribution server

### BEST MODE FOR CARRYING OUT THE INVENTION

Examples of the present invention will be described in detail hereinafter with reference to embodiments and the drawings. However, the embodiments described below exemplify a route search system for embodying the technical concepts of the present invention and are not intended to limit the present invention to a route search system. Equivalent application can also be made to route search systems of other embodiments that are included in the scope of the claims.

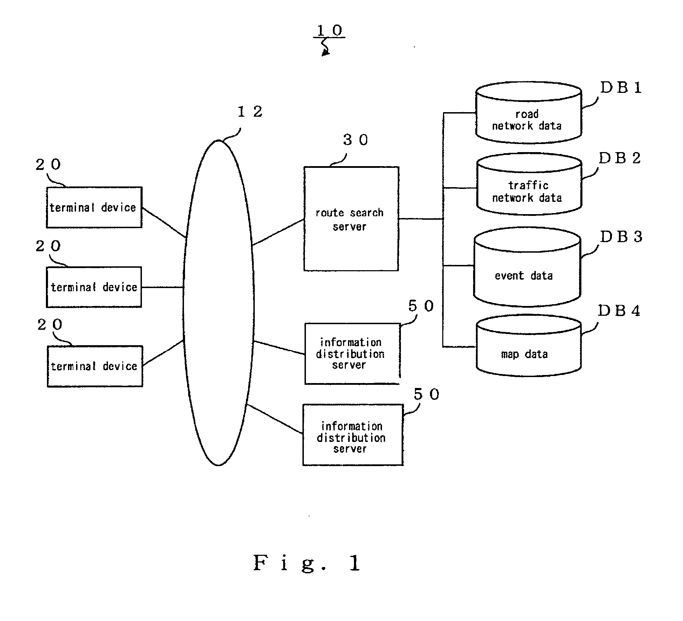

The route search system 10 according to the embodiments of the present invention has a configuration in which a route search server 30 and a terminal device 20 that uses a mobile phone, a PDA, a music player, or another mobile terminal are connected via the Internet or another network 12, as shown in FIG. 1. In the present embodiment, a route search system 10 for providing a communication-type route search and guidance route will be described using specific examples, but the present invention is not limited to these examples and can also be applied to a standalone-type route search system or the like.

The route search server 30 is provided with a database (DB1) in which road network data for route searches is accumulated, a database (DB2) in which data of a traffic network based on timetable data is accumulated as traffic network data, a database (DB3) in which data related to the same kind of event held in a plurality of locations and in a plurality of time periods is accumulated, and a database (DB4) in which map data or the like for display is accumulated. The event data can be acquired from an information distribution server 50 via a network. The configuration of the event data will be described hereinbelow.

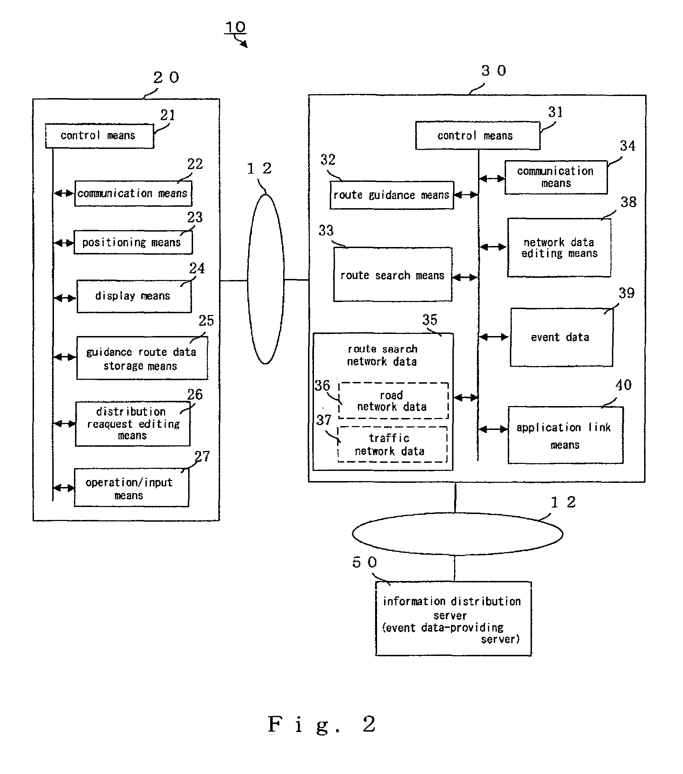

FIG. 2 is a block diagram showing a detailed configuration of the route search system 10 according to an embodiment of the present invention. The route search system 10 according to the embodiments of the present invention is provided with a route search server 30, an information distribution server 50, and a terminal device 20 for communication via the Internet or another network 12, as shown in the block diagram of FIG. 2.

The terminal device 20 sets the departure point, the destination, and other route search conditions and sends a route search request to the route search server 30. The route search server 30 references route search network data 35 composed of road network data 36 and traffic network data 37, searches for an optimal route in accordance with the route search conditions, and edits the optimal route to form guidance route data and sends the data to the terminal device 20.

The route search server 30 is provided with a route search network data 35 (database) in which there are accumulated traffic network data 37 for searching for a route interval using transportation facilities and road network data 36 including map data for searching for a route in navigation for pedestrians and car navigation for cars, and a database in which the event data 39 described above is accumulated.

In the present embodiment, movies will be used to describe a specific example of events of the same kind that are held in a plurality of locations and in a plurality of time periods. Conventionally, a person desiring to watch a movie uses a system or the like disclosed in Patent Document 1 described above, determines a movie to be watched by selecting the area (the area where the cinema exists), the genre (movie category), and the watching time period, and receives the distribution of a map of a cinema that is showing the film. In other words, there is no difference from the conventional method in which information listed in a movie magazine or the like is acquired as the most recent information from a mobile terminal.

In a city in particular, popular movies are often released in many cinemas and are shown at a plurality of cinemas, even in the same area. Also, it is quite difficult to perform a search in that there may be no available seats in one area but there may be available seats in a nearby area. Since the showing start time varies depending on the cinema, there are a great many choices and it is difficult to make a selection that is optimal for one's personal situation considering the required time and other factors of the route to actually go to the cinema.

In view of this situation, in the present invention, a configuration is provided in which the start time and the end time are determined in the manner of the showing of a movie at a cinema, and a route search can be carried out in a simple manner in the case of participation in a single event held in a plurality of locations and in a plurality of time periods. For this reason, data related to a movie showing is accumulated in the event data 39.

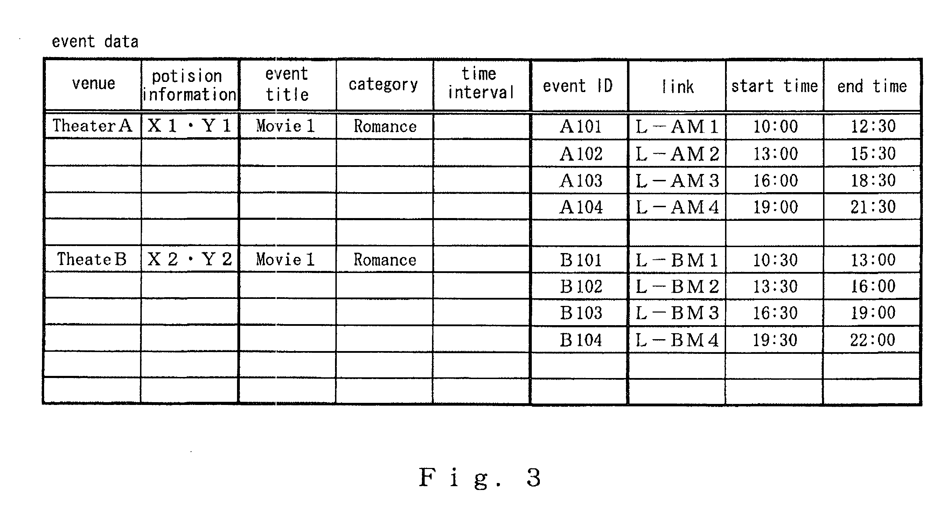

The data accumulated in the event data 39 is acquired from the information distribution server 50 in accordance with the data configuration shown in FIG. 3 by starting up application link means 40. In other words, the accumulated data is the event venue, the positional data (latitude and longitude) of the event venue for each cinema in the case of a movie, the title (event title) of the movie being shown at each cinema, the movie category, and the time length. The showing timetable is separated by theater, an identification number (event ID) is assigned using the events (movie showings) being shown a plurality of times as individual events, and the showing start time and end time are recorded. A link number based on the showing start time and end time is assigned to each event.

In FIG. 3, the position of a cinema A (Theater A) is a latitude and longitude (X1, Y1), and the movie being shown is a movie 1 (Movie 1 in the Romance category: Romance), which is shown four times having the IDs A101 to A104 in accordance with the times of FIG. 3. The position of a cinema B (Theater B) is a latitude and longitude (X2, Y2), and the movie being shown is the same movie 1 (Movie 1 in the Romance category: Romance) as at the cinema A, and is shown four times having the IDs B101 to B104 in accordance with the times of FIG. 3.

The cinema A and the cinema B where movie 1 is shown are event meeting plane nodes having positional information (latitude and longitude) and a route in which cinema A and cinema B are used as the destination can be searched by connecting to route search network data. When the movie being shown at each cinema is defined as the event virtual node, and an connection is made with the event meeting place node using a plurality of different links (see link L-AM1 and the like in FIG. 3) based on the showing time period (start time, end time), the event virtual node corresponds to a station of a transportation facility, and each link can be handled in the same manner as a train in that each link uses the cinema A and the cinema B, which are event meeting place nodes, as the departure and arrival stations.

Here, the difference from a traffic network is that the event virtual node does not have the positional information as does a train station. The event meeting place node and the event virtual node are connected by a plurality of links (see link L-AM1 and the like of FIG. 3) that are based on the different times. As described above, this shows that the link that connects the event meeting place node and the event virtual node can use the event meeting place as the departure station, and use the event virtual node as the arrival station in the same manner as a train. In the present invention, the event virtual node, which does not have positional information, indicates that the node is one that does not require positional information, and even were some type of positional information to be appended, the positional information would not be used and the node can be an event virtual node that essentially does not have positional information.

In the case that a desired departure point is specified from the terminal device 20 and a movie is selected as an event and a route search request is made, network data editing means 38 references event data 39, connects the venue (cinema A or cinema B) of the specified movie (event) in the manner described above to the route search network data 35 as an event meeting place node having positional information, registers each event as an event virtual node that does not have positional information, and performs an edit to connect the event meeting place node and the event virtual node using a plurality of links that are based on the different times of the event. Route search means 33 can reference the edited route search network data and search for an optimal guidance route, or a number of candidate routes that include the optimal guidance route, as the guidance route in order to view a specified movie.

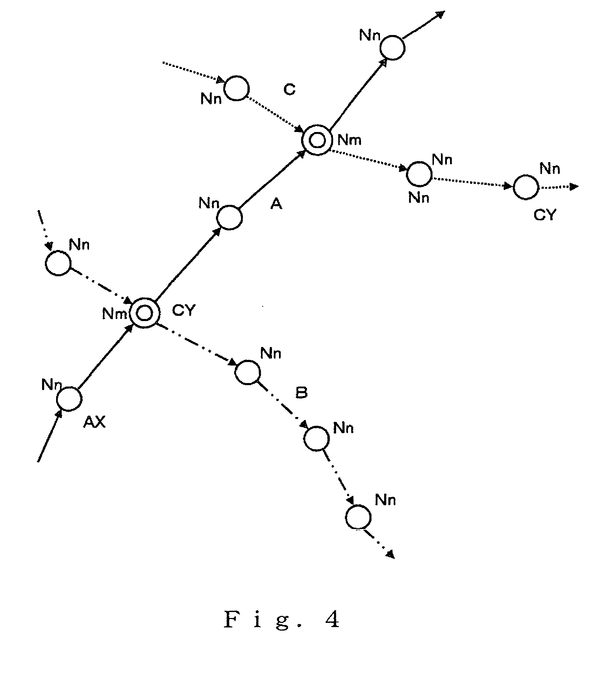

Described next is the route search network data to which the event meeting place node and the event virtual node described above are connected. The road network data 36 for searching for a route in navigation for a pedestrian and car navigation for a car is configured in the manner described below. For example, in the case that the road is composed of roads A, B, C as shown in FIG. 4, the endpoints, intersections, inflection points, and the like of the roads A, B, C are nodes, the roads connecting the nodes to each other are expressed by directional links, and the node data (latitude and longitude of the nodes), the link data (link number), and the link cost of each link (link distance or the time required to travel the link) are used as data in the link cost data.

In other words, in FIG. 4, Nn and Nm indicate nodes, wherein Nm indicates a road intersection. The directional links connecting the nodes to each other are indicated by arrowed lines (solid, dotted, and alternate long and two short dashes lines). The links include links that face in uphill and downhill directions, and in FIG. 4, only arrowed links are shown in order to simplify the diagram.

In the case that a route is searched using such road network data as a route search database, the links connected from the node of the departure point to the node of the destination, summing the link costs, and searching for and providing guidance along a route having the minimum total link cost. In other words, when a route search is performed using the node AX as the departure point and the node CY as the destination in FIG. 4, the road A is travelled from node AX, a right turn is made at the second intersection to enter road C, the links that arrive at node CY are sequentially followed, the link costs are totaled, and a route that minimizes the total value of the link costs is searched and guidance is provided.

In FIG. 4, other routes that reach from node AX to node CY are not shown, but other such routes actually exist. Therefore, routes that can reach from node AX to node CY are searched in the same manner, and the route having the smallest link cost is determined to be the optimal route from among the routes. This technique is carried out, for example, using a known method referred to as the Dijkstra method.

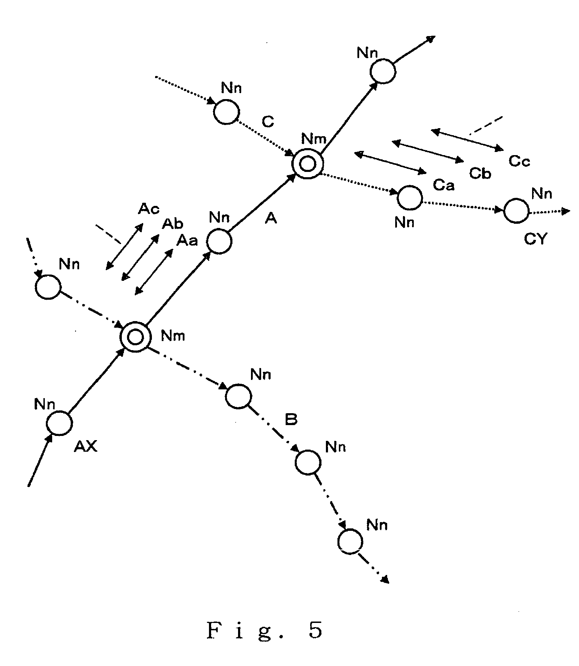

In contrast, the traffic network data 37 for searching for a route of transportation facilities is configured in the following manner. For example, in the case that [the route] is composed of the transportation lines A, B, and C as shown in FIG. 5, each station (each airport in the an aircraft line) disposed in the transportation lines A, B, C are used as nodes, the interval connecting the nodes to each other are expressed using directional links, and the node data (latitude, longitude) and link data (link number) are used as network data. In FIG. 5, Nn and Nm indicate nodes, wherein Nm indicates a change point (transfer point). The directional links connecting the nodes to each other are indicated by arrowed lines (solid, dotted, and alternate long and two short dashes lines). The links include links that face in uphill and downhill directions, and in FIG. 5, only arrowed links are shown in order to simplify the diagram.

However, the traffic network is essentially different in terms of link costs in comparison with a road network. In other words, the link costs are fixed and static in a road network, but in a traffic network, there is a plurality of trains and aircraft (the routes of individual trains, aircraft, and the like described below are referred to as transportation means) that operate on the transportation lines as shown in FIG. 5. The time of departure from the nodes in each transportation means and the time of arrival at the next node are established (are specified by timetable data and operation data), and there are cases in which individual routes do not necessarily link to an adjacent node. For example, there are cases such as an express train and a train that stops at each station. In such cases, a plurality of different links may be present on the same transportation line, and the time required between the nodes may differ depending on the transportation means.

In the traffic network exemplified in FIG. 5, a plurality of transportation means (routes) Aa to Ac ... are present in the transportation line A, and a plurality of transportation means (routes) Ca to Cc ... are present in the transportation line C. Therefore, the operation network of the transportation facilities is different from a simple road network, and the data of the nodes, links, and link costs is a data amount that is proportional to the total number of transportation means (the route of each aircraft, train, and the like). Accordingly, the data of the traffic network is a large data amount in comparison with the data amount of a road network. Therefore, the time required for a route search is considerable in accordance with the difference in the amount of data.

All of the transportation means that can be used (boarded) when travelling from a departure point to a destination are searched and transportation means that matches the search conditions must be identified in order to search for a route from a certain departure point to a certain destination using such traffic network data.

For example, in FIG. 5, in the case that a specific departure time is specified in which the departure point is used as the node AX of the transportation line A and a route is searched in which the node CY of the transportation line C is used as the destination, all of the transportation means following the departure time among the transportation means Aa to Ac which operate on the transportation line A are sequentially selected as the route at the time of departure. All of the combinations of the transportation means following the boardable time at the change node are searched among the transportation means Ca to Cc which operate on the transportation line C on the basis of the arrival time at the node for changing onto the transportation line C, and the required time, the number of transfers, and the like of each route are totaled and guidance is provided.

Therefore, the event meeting place node and the event virtual node described above are connected to the route search network data 35, the desired departure point is set, and the event (movie 1 or movie 2) in which participation is desired is specified, whereby the route search means 33 can search for a route in the same manner as an ordinary route search using the corresponding event virtual node as the destination. An optimal route or a number of candidate routes that arrive (i.e., the end of movie viewing) at the destination at the desired time can be searched as the guidance route, and guidance can be provided to the event meeting place node to which the corresponding event virtual node is connected.

The route search server 30 is composed of control means 31, route guidance means 32, communication means 34, and the like, in the same manner as an ordinary route search server. The control means 31 is a microprocessor having a RAM, ROM, and processor (not shown), and the operation of each component is controlled by a control program stored in the ROM. The communication means 34 is a communication interface for receiving and transmitting communication data with a terminal device 20 or the like via a network 12. The route guidance means 32 edits and distributes to the terminal device 20 map data for display, guidance data, and data of the guidance route searched by the route search means 33.

On the other hand, the terminal device 20 is composed of control means 21, communication means 22, positioning means 23, display means 24, guidance route data storage means 25, distribution request editing means 26, and operation/input means 27. The control means 31 is a microprocessor having a RAM, ROM, and processor (not shown), and the operation of each component is controlled by a control program stored in the ROM. The positioning means 23 is provided with a GPS receiver, and receives and processes GPS satellite signals to locate the current position (latitude and longitude) of the navigation terminal device 20

The communication means 22 includes a wireless communication unit and is used for communicating with the route search server 30. The operation/input means 27 is composed of keys, a dial, or the like, is used as an input function for operating the terminal device 20 and to input the departure point, the destination, and the like. The display means 24 is composed of a liquid crystal display panel or the like, and is used for displaying the route guidance and map of the guidance route data distributed from the route search server 30. The display means 24 also functions as input means for displaying a menu screen and operating the terminal device 20.

The distribution request editing means 26 uses as the departure point, the destination, the departure point inputted using the operation/input means 27, or the current position of the navigation terminal device 20 located by the positioning means 23, and creates a route search request to be sent to the route search server 30 on the basis of this information. In the case that a route search for participating in a movie or another event is requested from the route search server 30, the user specifies the desired departure point, the desired movie (event) for viewing, and the desired time (movie end time or the like) from the operation/input means 27 or from the menu screen display by the display means 24.

In the case that the route search server 30 has a function for connecting a category virtual node that shows the category of the movie to the route search network data 35, as described below, the category of the desired movie for viewing can be specified using the operation/input means 27 or using the menu screen displayed by the display means 24, and the distribution request editing means 26 can edit the route search request to be sent to the route search server 30.

The guidance route data storage means 25 stores guidance route data, map data, guidance, and the like, which are the result of the route search distributed from the route search server 30. The data is read from the guidance route data storage means 25 as required and display by the display means 24. Ordinarily, the guidance route and a mark indicating the current position of the navigation terminal device 20 are superimposed on a map having a fixed range or having a fixed scale that includes the current position of the navigation terminal device 20 located by the positioning means 23, and the current position mark is displayed in the center of the display screen

Since error is included in the current positional information (latitude and longitude information) located by the positioning means 23 which receives a GPS satellite signal. Route-matching processing for correcting the current position on the guidance route in the case that the current position is displaced from the guidance route, and map-matching processing for matching the road on the map are carried out. An audio message is played and outputted via a speaker to guide the user in the case that audio guide data (e.g., "Turn left at the intersection 300 m ahead.") is added to the guidance route data distributed from the route search server 30.

Next, the network data editing method and the route search method in the route search system 10 according to the embodiments of the present invention described above will be described in detail. In the following example, the fastest route from the current position (home) to view a desired movie will be searched.

The cinema is registered in the route search server 30 with positional information as information of the point of interest (POI) in the event data 39. This type of POI information may be collected from various types of information distribution servers 50 and may be accumulated apart from the event data 39 as POI data. It is also possible to provide a POI search service when a database in which POI information is accumulated is provided. The showing schedule of each cinema is also accumulated as data because guidance is provided in relation to movie performances in the event data 39 (see FIG. 3).

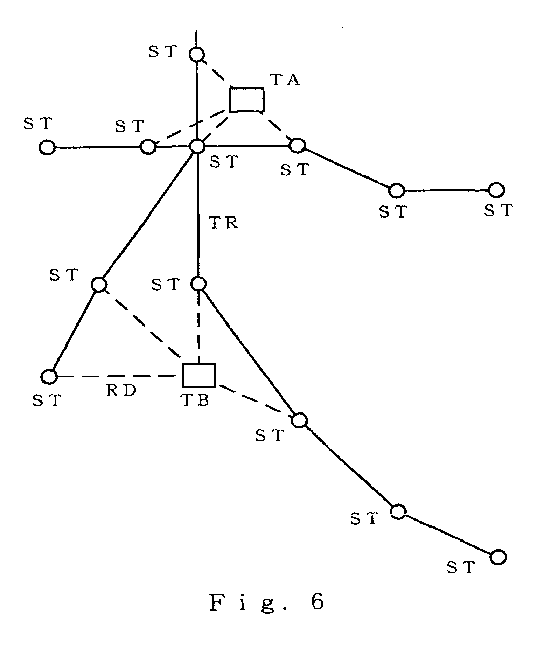

FIG. 6 is a schematic diagram showing a state in which cinema A or cinema B as an event meeting place node is connected to route search network data 35. In FIG. 6, the solid line TR shows a transportation line interval, the dotted line RD shows a walking interval (road interval), the reference numerals TA, TB show the cinemas A and B, which are event meeting place nodes, and ST shows each station of the transportation line. The cinemas A and B can be connected to the nodes of the nearest station ST via a road interval (walking interval) indicated by a dotted line because the position is specified by the latitude and longitude. There are many other event meeting place nodes, but only cinemas A and B are shown as typical examples in FIG. 6.

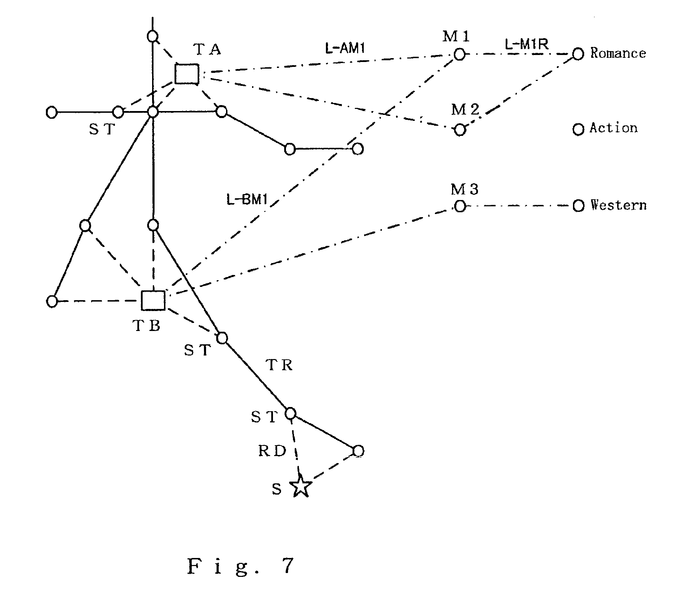

FIG. 7 is a schematic diagram showing a conceptualization of a connection to an event meeting place node, using as the event the cinematic work to be held at the event meeting place nodes TA, TB (cinema A, cinema B), or the like. In order to facilitate understanding, FIG. 7 is a representation that uses the network data that corresponds to the route search network data of FIG. 6. Examples of events include movie M1, movie M2, and movie M3, and the event virtual nodes M1 through M3, respectively, are assigned to the events. The virtual nodes are included in the route search network, but without positional information (suitable positional information can be added and left unused in the route search). A link is connected from the cinema showing the movie to these event virtual nodes.

The links are connected to the event meeting place node and the event virtual node and are connected by a plurality of different links for each time period (start time and end time) in which the movie M1 is being shown. In FIG. 7, in order to facilitate understanding, the only links shown are the link connected to the movie 1 (event virtual node) being shown at cinema TA (event meeting place node), which is indicated by the link L-AM1, and the link connected to the movie 1 (event virtual node) being shown at cinema TB (event meeting place node), which is indicated by the link L-BM1 (see FIG. 3 for other links). These links are unidirectional links that extend from the cinema to the movie. A timetable (start time period) is associated with the links, and the showing start time and end time of the movie are included in the timetable. The timetable is data formatted in the same manner as an operating timetable of a train or the like, as shown in FIG. 3.

In other words, the event meeting place node is expressed as a timetable such as that below, which can be viewed as a timetable for a departure station and arrival station in similar to a train schedule.

| | | | |
|---|---|---|---|
| Movie M1 | First showing | 10:00 departure | 12:30 arrival |
| Movie M1 | Second showing | 13:00 departure | 15:30 arrival |
| Movie M1 | Third showing | 16:00 departure | 18:30 arrival |
| Movie M1 | Fourth showing | 19:00 departure | 21:30 arrival |

In this manner, the data is edited into traffic network format so the appearance is as if a train is boarded at the cinema at each showing start time and the train arrives at the movie virtual node when the showing ends.

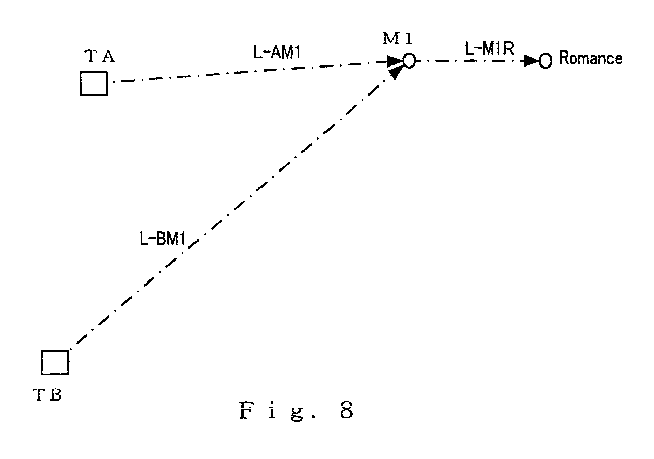

A category virtual node is established for the category of the event (movie), and a link L-M1R is connected from the event (movie) to the category. For example, when the category (theme) to which the movie M1 as the event belongs is romance (Romance), a link L-M1R is connected from the event virtual node to the category virtual node of "Romance." This portion is lifted out and shown in FIG. 8. The link L-M1R is also a unidirectional link to a category, and the link cost of this portion is set to a cost of 0 so that no difference is generated, or to a fixed value. In this case, a connection is also made to movie 2 when movie 2 is also a movie that belongs to the same category in the category virtual node of "Romance." Adopting such a configuration makes it possible to select a category virtual node, i.e., movie category in the manner described below and carry out a route search for selecting and viewing a movie of interest.

Returning to FIG. 7, a route search for the case in which [the user] desires to watch a movie (M1) from the current location S (e.g., home) will be described. The position of the current location S is acquired from a GPS or the like, the current position S is set as the departure point, and a route search is carried out using the destination as the event virtual node of the movie 1 (M1) in the case that the desired movie is movie 1 (M1). The route search as such can be carried out using the method disclosed in Patent Document 2 or Japanese Laid-open Patent Application No. 2003-227732 with consideration given to a train timetable.

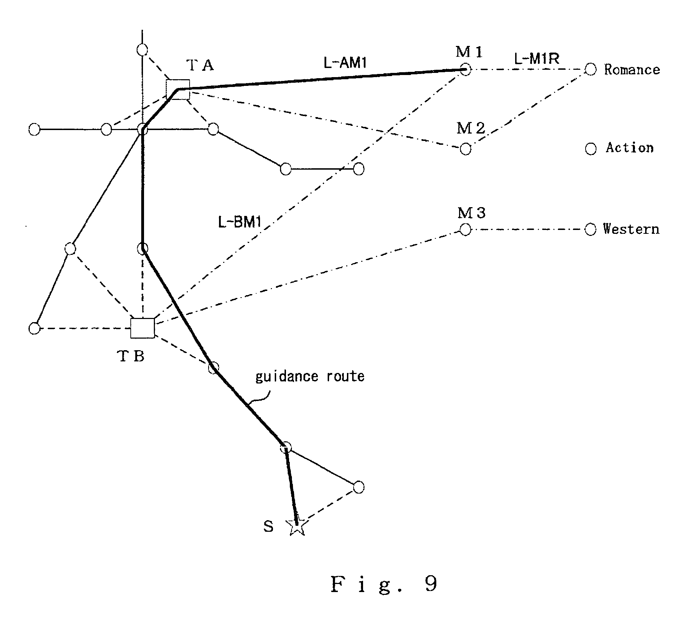

For example, using a condition that the departure point is departed at 9:30, the route search result is a search result indicating that the earliest movie that can be seen (that can be seen in its entirety) is the first showing at cinema TA at 10:30, as shown in FIG. 9. The cinema TB is near the departure point, and the result described above is obtained with consideration given to the total of the showing time and the movement time. This search is not repeated by trial and error, but is obtained as an optimal solution by searching for the optimal route in a single search to the destination in accordance with the conditions. The route search means 33 can not only search and provide guidance along the optimal route, but can also search and provide guidance along a number of candidate routes that satisfy the conditions. Providing guidance related to a candidate route allows the user to consider travelling to the second candidate cinema or one thereafter in the case that the cinema specified in the optimal route is full.

It is also possible to specify a category rather than directly specifying a desired movie. A search for an optimal route is performed using the category virtual node of Romance as the destination when the category "Romance" is specified. In the case that the category belonging to movie 2 is Romance, the movie 2 may be selected as the optimal route depending on the showing time as shown in Fig. 7 because the movie 2 is also connected to the category virtual node of Romance. In accordance with such a configuration, a category is selected, a cinema is searched that allows viewing in the desired time period from among the plurality of events (movies) belonging to the category, and the desired time can be spent viewing a movie provided that there is interest in the movie.

In the description above, a search was carried out under the condition that [the user] desired to watch a movie as soon as possible, but it is also possible to find a route in which the movie ends so that the time of arrival is as close as possible by performing a search using the time of arrival at the virtual node as a condition.

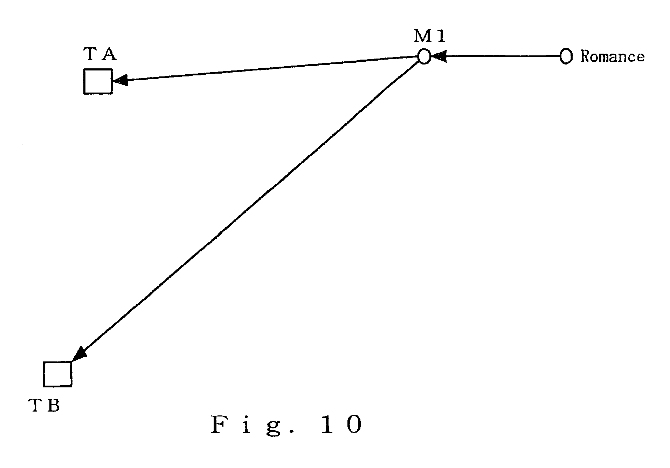

In the description above, a route search was described in which the event virtual node of a movie as the event was used as the destination, but it may be the case that a route is expected beyond the event. In other words, there are also cases in which the cinema is a transit point and the next transit point or final destination is set beyond the cinema. In order to accommodate such a usage, rather than using the event virtual node as a starting point, it is possible to trace the route back until arriving at the event virtual node, as shown in FIG. 10, follow the route again to the node having the actual position, i.e., the cinemas TA and TB (event meeting place nodes), and start a search for a route from the actual position to the next destination.

As described in detail above, in accordance with the present invention, a route can be searched in coordination with a traffic network by adding to a virtual node a schedule that signifies staying from the start until the finish of an event such as a movie, and adding time information to a link of the virtual node. Therefore, the event is not limited to being a movie. For example, the user develops a toothache during a trip and a 30-minute treatment at a dental clinic is required. A time frame in which an online reservation is open at variously located dental clinics can be substituted in place of the event, a route can be searched in the same manner as the case of a movie, and a dental clinic at which treatment can be received the soonest can be searched. It is also possible to search for a route that will minimally affect arrival at the final destination.

## Claims

1. A route search system adapted to set a desired departure point and to search for a route for participating in one event of the same kind held in a plurality of locations and in a plurality of time periods, the route search system comprises route searching means (33), network data editing means (38), and a database storing event data (39) provided with a venue and time of said event, **characterized in that** the route search system further comprises
a database storing route search network data (35) for searching for a route that makes use of walking and transportation facilities, wherein
said network data editing means (38) is adapted to connect the venue of said event as an event meeting place node having positional information to said route search network data (35), to register said event as an event virtual node that does not have positional information, and to make a connection from the event meeting place node to the event virtual node using a plurality of links based on the different times of an event; and
said route searching means (33) is adapted to search for a guidance route from said departure point using the corresponding event virtual node, registered by the network data editing means (38), as the destination and to provide guidance to a corresponding event and the venue of the event in the case that a specific event is specified from among a plurality of events using a desired point as a departure point and a route search is requested.

2. The route search system according to claim 1, **characterized in that** said route searching means (33) is adapted to search for an optimal route or a plurality of candidate routes including the optimal route as a guidance route from said departure point to an event virtual node, which is the destination.

3. The route search system according to claim 1, **characterized in that** a link based on the time of said event is expressed in a format of a transportation timetable showing departure from the event meeting place node at the start time of the event and the arrival at the event virtual node at the end time of the event.

4. The route search system according to claim 1, **characterized in that** the route search system is adapted to acquire said event data (39) from an event information-providing server (50) adapted to provide information related to a corresponding event via a network.

5. The route search system according to claim 1, **characterized in that**
said network data editing means (38) is adapted to register the category of said event as a category virtual node that does not have positional information, and to make a connection from the event virtual node to the category virtual node using a link having a fixed cost, said event being placed into a category; and
said route searching means (33) is adapted to search for a guidance route from said departure point using the corresponding category virtual node as the destination and to provide guidance to a corresponding event and the venue of the event in the case that a specific category is specified from among said categories using a desired point as a departure point and a route search is requested.

6. The route search system according to claim 5, **characterized in that** said route searching means (33) is adapted to search for an optimal route or a plurality of candidate routes including the optimal route as a guidance route from said departure point to a category virtual node, which is the destination, and to provide guidance to a corresponding event and the venue of the event.

7. A route search server (30) comprising a database storing route search network data (35) adapted to search for a route using walking and transportation facilities, and route search means (33) adapted to connect to a terminal device (20) for setting the departure point via a network, the route search server (30) **characterized in that**
said route search server (30) comprises network data editing means (38) and a database storing event data provided with the venue and time of said event, adapted to select a single event of a same type held at a plurality of locations and a plurality of time periods, to set a desired departure point, and to search for a route for participating in the event;
said network data editing means (38) is adapted to connect the venue of said event as an event meeting place node having positional information to said route search network data (35), to register said event as an event virtual node that does not have positional information, and to make a connection from the event meeting place node to the event virtual node using a plurality of links based on the different times of an event; and
said route searching means (33) is adapted to search for a guidance route from said departure point using the corresponding event virtual node, registered by the network data editing means (38), as the destination and adapted to provide to said terminal device (20) guidance to a corresponding event and the venue of the event in the case that a specific event is specified from among said events using a desired point as a departure point and a route search is requested.

8. The route search server (30) according to claim 7, **characterized in that** said route searching means (33) is adapted to search for an optimal route or a plurality of candidate routes including the optimal route as a guidance route from said departure point to an event virtual node, which is the destination.

9. The route search server (30) according to claim 7, **characterized in that** a link based on the time of said event is expressed in a format of a transportation timetable showing departure from the event meeting place node at the start time of the event and the arrival at the event virtual node at the end time of the event.

10. The route search server (30) according to claim 7, **characterized in that** the route search server is adapted to acquire said event data (39) from an event information-providing server (50) for providing information related to a corresponding event via a network.

11. The route search server (30) according to claim 7, **characterized in that**
said network data editing means (38) is adapted to register the category of said event as a category virtual node that does not have positional information, and to make a connection from the event virtual node to the category virtual node using a link having a fixed cost, said event being placed into a category; and
said route searching means (33) is adapted to search for a guidance route from said departure point using the category virtual node as said destination and to provide guidance to a corresponding event and the venue of the event in the case that a specific category is specified from among said categories using a desired point as a departure point and a route search is requested.

12. The route search server according to claim 11, **characterized in that** said route searching means (33) is adapted to search for an optimal route or a plurality of candidate routes including the optimal route as a guidance route from said departure point to a category virtual node, which is the destination, and to provide guidance to a corresponding event and the venue of the event.

13. A route search method in a route search system for setting a desired departure point and searching for a route for participating in one event of the same kind held in a plurality of locations and in a plurality of time periods, the route search method **characterized in that** said route search system has a database storing route search network data (35) for searching for a route that makes use of walking and transportation facilities, route searching means (33), network data editing means (38), and a database storing event data (39) provided with a venue and time of said event;
said network data editing means (38), connecting the venue of said event as an event meeting place node having positional information to said route search network data (35), registering each of the said events as an event virtual node that does not have positional information and making a connection from the event meeting place node to the event virtual node using a plurality of links based on the different times of an event;
said route searching means (33), searching for a guidance route from said departure point using the event virtual node, registered by the network data editing means (38), as said destination in the case that a specific event is specified from among said events using a desired point as a departure point; and
providing guidance to a corresponding event and the venue of the event.

14. The route search method according to claim 13, **characterized in that** searching for a guidance route includes processing for searching for an optimal route or a plurality of candidate routes including the optimal route from said departure point to an event virtual node, which is the destination.

15. The route search method according to claim 13, **characterized in** further comprising the steps of:
said network data editing means (38), registering the category of said event as a category virtual node that does not have positional information, and making a connection from the event virtual node to the category virtual node using a link having a fixed cost, said event being placed into a category;
said route searching means (33), searching for a guidance route from said departure point using the category virtual node as said destination in the case that a specific category is specified from among said categories using a desired point as a departure point and a route search is requested.

16. The route search method according to claim 15, **characterized in that** searching for a guidance route includes processing for searching for an optimal route or a plurality of candidate routes including the optimal route from said departure point to an event virtual node, which is said destination.

17. A terminal device (20) adapted to search for a route for participating in one event of the same kind held in a plurality of locations and in a plurality of time periods, and which comprises a database storing route search network data (35), route search means, network data editing means (38), and a database storing event data (39) provided with venue and time of said event, **characterized in that**
said network data editing means (38) is adapted to connect the venue of said event as an event meeting place node having positional information to said route search network data (35), to register said event as an event virtual node that does not have positional information, and to make a connection from the event meeting place node to the event virtual node using a plurality of links based on the different times of an event; and
said route searching means is adapted to connect via a network to a route search server (30) for searching for a guidance route from said departure point using the corresponding event virtual node, registered by the network data editing means (38), as said destination and to provide guidance in the case that a departure point and a specific event are specified from a terminal device (20) from among said events and a route search is requested, the terminal device wherein
said terminal device (20) is provided with means adapted to specify a desired departure point and event and to send a route search request to said route search server.

18. The terminal device according to claim 17, wherein said network data editing means (38) is adapted to register the category of said event as a category virtual node that does not have positional information, and to make a connection from the event virtual node to the category virtual node using a link having a fixed cost, said event being placed into a category, said route searching means is adapted to connect to a route search server for searching for a guidance route from said departure point using the corresponding category virtual node as said destination, the terminal device (20) wherein
said terminal device (20) is further provided with means adapted to specify a desired departure point and category and to send a route search request to said route search server (30).

## Patentansprüche

1. Routensuchsystem, das eingerichtet ist zum Setzen eines gewünschten Abgangspunktes und zum Suchen nach einer Route zum Partizipieren in einem Ereignis derselben Art, dass in einer Vielzahl von Orten und in einer Vielzahl von Zeitperioden abgehalten wird, wobei das Routensuchsystem Routensuchmittel (33), Netzdateneditiermittel (38), und eine Datenbank, welche Ereignisdaten speichert (39), versehen mit einer Örtlichkeit und einer Zeit des Ereignisses, umfasst, **dadurch gekennzeichnet, dass** das Routensuchsystem ferner umfasst
eine Datenbank, welche Routensuchnetzdaten speichert (35), zum Suchen nach einer Route, welche Laufen und Transporteinrichtungen verwendet, wobei
das Netzdateneditiermittel (38) eingerichtet ist zum Verbinden der Örtlichkeit des Ereignisses als ein Ereignistreffpunktknoten mit Positionsinformation mit den Routensuchnetzdaten (35), um das Ereignis als einen virtuellen Ereignisknoten zu registrieren, welcher keine Positionsinformationen aufweist, und zum Herstellen einer Verbindung von dem Ereignistreffpunktknoten mit dem virtuellen Ereignisknoten unter Verwendung einer Vielzahl von Verbindungen, basierend auf den verschiedenen Zeiten eines Ereignisses; und
das Routensuchmittel (33) eingerichtet ist zum Suchen nach einer Führungsroute von dem Abgangspunkt unter Verwendung des entsprechenden virtuellen Ereignisknotens, registriert durch das Netzdateneditiermittel (38), als das Ziel und zum Bereitstellen von Führung zu einem entsprechenden Ereignis und der Örtlichkeit des Ereignisses in dem Fall, dass ein spezifisches Ereignis spezifiziert ist, unter einer Vielzahl von Ereignissen, verwendend einen gewünschten Punkt als einen Abgangspunkt, und eine Routensuche angefragt wird.

2. Routensuchsystem nach Anspruch 1, **dadurch gekennzeichnet, dass** das Routensuchmittel (33) eingerichtet ist zum Suchen nach einer optimalen Route oder einer Vielzahl von Kandidatenrouten, beinhaltend die optimale Route, als eine Führungsroute von dem Abgangspunkt zu einem virtuellen Ereignisknoten, welches das Ziel ist.

3. Routensuchsystem nach Anspruch 1, **dadurch gekennzeichnet, dass** eine Verbindung basierend auf der Zeit des Ereignisses ausgedrückt ist in einer Form eines Transportzeitplans, welcher eine Abfahrt von dem Ereignistreffpunktknoten zu der Startzeit des Ereignisses und die Ankunft bei dem virtuellen Ereignisknoten zur Endzeit des Ereignisses zeigt.

4. Routensuchsystem nach Anspruch 1, **dadurch gekennzeichnet, dass** das Routensuchsystem eingerichtet ist zum Erlangen der Ereignisdaten (39) von einem Ereignisinformationsbereitstellungsserver (50), der eingerichtet ist zum Bereitstellen von Information bezüglich eines entsprechenden Ereignisses über ein Netz.

5. Routensuchsystem nach Anspruch 1, **dadurch gekennzeichnet, dass**
das Netzdateneditiermittel (38) eingerichtet ist zum Registrieren der Kategorie des Ereignisses als einen virtuellen Kategorieknoten, welcher keine Positionsinformation aufweist, und zum Herstellen einer Verbindung von dem virtuellen Ereignisknoten zu dem virtuellen Kategorieknoten unter Verwendung einer Verbindung mit festen Kosten, wobei das Ereignis in eine Kategorie platziert wird; und
das Routensuchmittel (33) eingerichtet ist zum Suchen nach einer Führungsroute von dem Abgangspunkt unter Verwendung des entsprechenden virtuellen Kategorieknotens als das Ziel und zum Bereitstellen von Führung zu einem entsprechenden Ereignis und der Örtlichkeit des Ereignisses in dem Fall, dass eine spezifische Kategorie spezifiziert wird, unter den Kategorien, unter Verwendung eines gewünschten Punkts als ein Abgangspunkt und eine Routensuche angefragt wird.

6. Routensuchsystem nach Anspruch 5, **dadurch gekennzeichnet, dass** das Routensuchmittel (33) eingerichtet ist zum Suchen nach einer optimalen Route oder einer Vielzahl von Kandidatenrouten, beinhaltend die optimale Route, als eine Führungsroute von dem Abgangspunkt zu einem virtuellen Kategorieknoten, welcher das Ziel ist, und zum Bereitstellen von Führung zu dem entsprechenden Ereignis und der Örtlichkeit des Ereignisses.

7. Routensuchserver (30) mit einer Datenbank, welche Routensuchnetzdaten (35) speichert, eingerichtet zum Suchen nach einer Route, verwendend Laufen und Transporteinrichtungen, und Routensuchmittel (33), eingerichtet zum Verbinden einer Endgeräteinrichtung (22) zum Einstellen des Abgangspunkts über ein Netz, wobei der Routensuchserver (30) **dadurch gekennzeichnet ist, dass**
der Routensuchserver (30) Netzdateneditiermittel (38) und eine Datenbank umfasst, welche Ereignisdaten, versehen mit der Örtlichkeit und der Zeit des Ereignisses, speichert, eingerichtet zum Auswählen eines einzelnen Ereignisses eines selben Typs, welches in einer Vielzahl von Orten und einer Vielzahl von Zeitperioden abgehalten wird, zum Setzen eines gewünschten Abgangspunkts und zum Suchen nach einer Route zum Partizipieren in dem Ereignis;
das Netzdateneditiermittel (38) eingerichtet ist zum Verbinden der Örtlichkeit des Ereignisses als ein Ereignistreffpunktknoten mit Positionsinformation zu den Routensuchnetzdaten (35), zum Registrieren des Ereignisses als einen virtuellen Ereignisknoten, welcher keine Positionsinformation hat, und zum Herstellen einer Verbindung von dem Ereignistreffpunktknoten zu dem virtuellen Ereignisknoten unter Verwendung einer Vielzahl von Verbindungen, basierend auf den verschiedenen Zeiten eines Ereignisses; und
das Routensuchmittel (33) eingerichtet ist zum Suchen nach einer Führungsroute von dem Abgangspunkt unter Verwendung des entsprechenden virtuellen Ereignisknotens, registriert durch das Netzdateneditiermittel (38), als das Ziel und eingerichtet ist zum Bereitstellen von Führung an die Endgeräteinrichtung (20) zu einem entsprechenden Ereignis und der Örtlichkeit des Ereignisses in dem Fall, dass ein spezifisches Ereignis spezifiziert wird, unter den Ereignissen, verwendend einen gewünschten Punkt als einen Abgangspunkt, und eine Routensuche angefragt wird.

8. Routensuchserver (30) nach Anspruch 7, **dadurch gekennzeichnet, dass** das Routensuchmittel (33) eingerichtet ist zum Suchen nach einer optimalen Route oder einer Vielzahl von Kandidatenrouten, beinhaltend die optimale Route, als eine Führungsroute von dem Abgangspunkt zu dem virtuellen Ereignisknoten, welches das Ziel ist.

9. Routensuchserver (30) nach Anspruch 7, **dadurch gekennzeichnet, dass** eine Verbindung basierend auf der Zeit des Ereignisses ausgedrückt wird in einem Format eines Transportzeitplans, welcher Abfahrt von dem Ereignistreffpunktknoten zu der Startzeit des Ereignisses und die Ankunft bei dem virtuellen Ereigniskonten bei der Endzeit des Ereignisses zeigt.

10. Routensuchserver (30) nach Anspruch 7, **dadurch gekennzeichnet, dass** der Routensuchserver eingerichtet ist zum Erlangen der Ereignisdaten (39) von einem Ereignisinformationsbereitstellungsserver (50) zum Bereitstellen von Information bezüglich eines entsprechenden Ereignisses über ein Netz.

11. Routensuchserver (30) nach Anspruch 7, **dadurch gekennzeichnet, dass**
das Netzdateneditiermittel (38) eingerichtet ist zum Registrieren der Kategorie des Ereignisses als einen virtuellen Kategorieknoten, welcher keine Positionsinformation hat, und zum Herstellen einer Verbindung von dem virtuellen Ereignisknoten zu dem virtuellen Kategorieknoten unter Verwendung einer Verbindung mit festen Kosten, wobei das Ereignis in der Kategorie platziert wird; und
das Routensuchmittel (33) eingerichtet zum Suchen nach einer Führungsroute von dem Abgangspunkt unter Verwendung des virtuelle Kategorieknotens als das Ziel und zum Bereitstellen von Führung zu dem entsprechenden Ereignis und der Örtlichkeit des Ereignisses in dem Fall, dass eine spezifische Kategorie spezifiziert wird, unter den Kategorien, verwendend einen gewünschten Punkt als den Abgangspunkt, und eine Routensuche angefragt wird.

12. Routensuchserver nach Anspruch 11, **dadurch gekennzeichnet, dass** das Routensuchmittel (33) eingerichtet ist zum Suchen nach einer optimalen Route oder einer Vielzahl von Kandidatenrouten, beinhaltend die optimale Route, als eine Führungsroute von dem Abgangspunkt zu dem virtuellen Kategorieknoten, welches das Ziel ist, und zum Bereitstellen von Führung zu einem entsprechenden Ereignis und der Örtlichkeit des Ereignisses.

13. Routensuchverfahren in einem Routensuchsystem zum Setzen eines gewünschten Abgangspunkts und Suchen nach einer Route zum Partizipieren in einem Ereignis derselben Art, welches in einer Vielzahl von Orten und in einer Vielzahl von Zeitperioden abgehalten wird, wobei das Routensuchverfahren **dadurch gekennzeichnet ist, dass**
das Routensuchsystem eine Datenbank, welche Routensuchnetzdaten (35) speichert zum Suchen nach einer Route, welche Laufen und Transporteinrichtungen verwendet, Routensuchmittel (33), Netzdateneditiermittel (38), und eine Datenbank, welche Ereignisdaten (39) speichert, versehen mit einer Örtlichkeit und einer Zeit des Ereignisses, aufweist;
das Netzdateneditiermittel (38), die Örtlichkeit des Ereignisses als einen Ereignistreffpunktknoten mit Positionsinformation zu den Routensuchnetzdaten (35) verbindet, jedes der Ereignisse als einen virtuellen Ereignisknoten registriert, welcher keine Positionsinformation aufweist, und eine Verbindung von dem Ereignistreffpunktknoten zu dem virtuellen Ereignisknoten unter Verwendung einer Vielzahl von Verbindungen, basierend auf den verschiedenen Zeiten eines Ereignisses, herstellt;
das Routensuchmittel (33) nach einer Führungsroute von dem Abgangspunkt unter Verwendung des virtuellen Ereignisknotens, registriert durch das Netzdateneditiermittel (38), als das Ziel in dem Fall, dass ein spezifisches Ereignis spezifiziert wird unter den Ereignissen, verwendend einen gewünschten Punkt als einen Abgangspunkt, suchen; und
Bereitstellen von Führung zu einem entsprechenden Ereignis und der Örtlichkeit des Ereignisses.

14. Routensuchverfahren nach Anspruch 13, **dadurch gekennzeichnet, dass** die Suche nach einer Führungsroute beinhaltet Verarbeiten zum Suchen nach einer optimalen Route oder einer Vielzahl von Kandidatenrouten, beinhaltend die optimale Route, von dem Abgangspunkt zu dem virtuellen Ereignisknoten, welches das Ziel ist.

15. Routensuchverfahren nach Anspruch 13, **gekennzeichnet durch** ferner umfassen der Schritte:
das Netzdateneditiermittel (38), Registrieren der Kategorie des Ereignisses als einen virtuellen Ereignisknoten, welcher keine Positionsinformation hat, und Herstellen einer Verbindung von dem virtuellen Ereignisknoten zu dem virtuellen Kategorieknoten unter Verwendung einer Verbindung mit festen Kosten, wobei das Ereignis in eine Kategorie platziert wird;
das Routensuchmittel (33), Suchen nach einer Führungsroute von dem Abgangspunkt unter Verwendung des virtuellen Kategorieknotens als das Ziel in dem Fall, dass eine spezifische Kategorie spezifiziert wird unter den Kategorien, verwendend einen gewünschten Punkt als einen Abgangspunkt, und eine Routensuche angefragt wird.

16. Routensuchverfahren nach Anspruch 15, **dadurch gekennzeichnet, dass** Suchen nach einer Führungsroute beinhaltet Verarbeiten zum Suchen nach einer optimalen Route oder einer Vielzahl von Kandidatenrouten, beinhaltend die optimale Route, von dem Abgangspunkt zu dem virtuellen Ereigniskonten, welches das Ziel ist.

17. Endgeräteinrichtung (20), welche eingerichtet ist zum Suchen nach einer Route zum Partizipieren in einem Ereignis derselben Art, welches in einer Vielzahl von Orten und in einer Vielzahl von Zeitperioden abgehalten wird, und welches eine Datenbank, welche Routensuchnetzdaten (35) speichert, Routensuchmittel, Netzdateneditiermittel (38), und eine Datenbank, welche Ereignisdaten speichert (39), versehen mit Örtlichkeit und Zeit des Ereignisses, umfasst, **dadurch gekennzeichnet, dass**
das Netzdateneditiermittel (38) eingerichtet ist zum Verbinden der Örtlichkeit des Ereignisses als einen Ereignistreffpunktknoten mit Positionsinformation zu den Routensuchnetzdaten (35), zum Registrieren des Ereignisses als einen virtuellen Ereignisknoten, welcher keine Positionsinformation hat, und zum Herstellen einer Verbindung von dem Ereignistreffpunktknoten zu dem virtuellen Ereignisknoten unter Verwendung einer Vielzahl von Verbindungen, basierend auf den verschiedenen Zeiten eines Ereignisses; und
das Routensuchmittel eingerichtet ist zum Verbinden über ein Netz zu dem Routensuchserver (30), zum Suchen nach einer Führungsroute von dem Abgangspunkt unter Verwendung des entsprechenden virtuellen Ereignisknotens, registriert durch das Netzdateneditiermittel (38), als das Ziel und zum Bereitstellen von Führung in dem Fall, dass ein Abgangspunkt und ein spezifisches Ereignis von einer Endgeräteinrichtung (20) spezifiziert werden, unter den Ereignissen, und eine Routensuche angefragt wird, die Endgeräteinrichtung wobei
die Endgeräteinrichtung (20) versehen ist mit Mitteln eingerichtet zum Spezifizieren eines gewünschten Abgangspunkts und Ereignis und zum Senden einer Routensuchanfrage zu dem Routensuchserver.

18. Endgeräteinrichtung nach Anspruch 17, wobei das Netzdateneditiermittel (38) eingerichtet ist zum Registrieren der Kategorie des Ereignisses als einen virtuellen Kategorieknoten, welcher keine Positionsinformation hat, und zum Herstellen einer Verbindung von dem virtuellen Ereignisknoten zu dem virtuellen Kategorieknoten unter Verwendung einer Verbindung mit festen Kosten, wobei das Ereignis in eine Kategorie platziert wird, wobei das Routensuchmittel eingerichtet ist zum Verbinden eines Routensuchservers zum Suchen nach einer Führungsroute von dem Abgangspunkt unter Verwendung des entsprechenden virtuellen Kategorieknotens als das Ziel, die Endgeräteinrichtung (20) wobei
die Endgeräteinrichtung (20) ferner versehen ist mit Mitteln, eingerichtet zum Spezifizieren eines gewünschten Abgangspunkts und Kategorie und zum Senden einer Routensuchanfrage zu dem Routensuchserver (30).

## Revendications

1. Système de recherche d'itinéraire adapté pour définir un point de départ désiré et pour rechercher un itinéraire pour participer à un événement du même type ayant lieu dans une pluralité d'emplacements et dans une pluralité de périodes, le système de recherche d'itinéraire comprend un moyen de recherche d'itinéraire (33), un moyen d'édition de données de réseau (38) et une base de données stockant des données d'événement (39) comportant le lieu et l'heure dudit événement, **caractérisé en ce que** le système de recherche d'itinéraire comprend en outre
une base de données stockant des données de réseau de recherche d'itinéraire (35) pour rechercher un itinéraire qui utilise des chemins pédestres et des équipements de transport, où
ledit moyen d'édition de données de réseau (38) est adapté pour relier le lieu dudit événement, en tant que noeud de lieu d'occurrence de l'évènement ayant des informations de position, auxdites données de réseau de recherche d'itinéraire (35), pour enregistrer ledit événement en tant que noeud virtuel d'événement n'ayant pas des informations de position, et pour établir une connexion du noeud du lieu d'occurrence de l'évènement au noeud virtuel d'événement en utilisant une pluralité de liens basés sur différentes heures d'un événement ; et
ledit moyen de recherche d'itinéraire (33) est adapté pour rechercher un itinéraire de guidage à partir dudit point de départ en utilisant le noeud virtuel d'événement correspondant, enregistré par le moyen d'édition de données de réseau (38), en tant que destination et pour fournir un guidage vers un événement correspondant et le lieu de l'événement dans le cas où un événement spécifique est spécifié parmi une pluralité d'événements en utilisant un point désiré comme point de départ et une recherche d'itinéraire est demandée.

2. Système de recherche d'itinéraire selon la revendication 1, **caractérisé en ce que** ledit moyen de recherche d'itinéraire (33) est adapté pour rechercher un itinéraire optimal ou une pluralité d'itinéraires candidats comportant l'itinéraire optimal en tant qu'itinéraire de guidage dudit point de départ à un noeud virtuel d'événement, qui est la destination.

3. Système de recherche d'itinéraire selon la revendication 1, **caractérisé en ce qu'**un lien basé sur l'heure dudit événement est exprimé dans un format d'une grille horaire de transport indiquant le départ à partir du noeud du lieu d'occurrence de l'événement à l'heure de début de l'événement et l'arrivée au noeud virtuel d'événement à l'heure de fin de l'événement.

4. Système de recherche d'itinéraire selon la revendication 1, **caractérisé en ce que** le système de recherche d'itinéraire est adapté pour acquérir lesdites données d'événement (39) à partir d'un serveur (50) fournissant des informations d'événement adapté pour fournir des informations relatives à un événement correspondant via un réseau.

5. Système de recherche d'itinéraire selon la revendication 1, **caractérisé en ce que**
ledit moyen d'édition de données de réseau (38) est adapté pour enregistrer la catégorie dudit événement en tant que noeud virtuel de catégorie n'ayant pas des informations de position, et pour établir une connexion du noeud virtuel d'événement au noeud virtuel de catégorie en utilisant un lien ayant un coût fixe, ledit événement étant placé dans une catégorie ; et
ledit moyen de recherche d'itinéraire (33) est adapté pour rechercher un itinéraire de guidage à partir dudit point de départ en utilisant le noeud virtuel de catégorie correspondant en tant que destination et pour fournir un guidage vers un événement correspondant et le lieu de l'événement dans le cas où une catégorie spécifique est spécifiée parmi lesdites catégories en utilisant un point désiré comme point de départ et une recherche d'itinéraire est demandée.

6. Système de recherche d'itinéraire selon la revendication 5, **caractérisé en ce que** ledit moyen de recherche d'itinéraire (33) est adapté pour rechercher un itinéraire optimal ou une pluralité d'itinéraires candidats comportant l'itinéraire optimal en tant qu'itinéraire de guidage dudit point de départ à un noeud virtuel de catégorie, qui est la destination, et pour fournir un guidage vers un événement correspondant et le lieu de l'événement.

7. Serveur de recherche d'itinéraire (30) comprenant une base de données stockant des données de réseau de recherche d'itinéraire (35) adaptée pour rechercher un itinéraire qui utilise des chemins pédestres et des équipements de transport, et un moyen de recherche d'itinéraire (33) adapté pour se connecter à un dispositif terminal (20) pour définir le point de départ via un réseau, le serveur de recherche d'itinéraire (30) étant **caractérisé en ce que**
ledit serveur de recherche d'itinéraire (30) comprend un moyen d'édition de données de réseau (38) et une base de données stockant des données d'événement comportant le lieu et l'heure dudit événement, adaptés pour sélectionner un seul événement d'un même type ayant lieu à une pluralité d'emplacements et dans une pluralité de périodes, pour définir un point de départ désiré, et pour rechercher un itinéraire pour participer à l'événement ;
ledit moyen d'édition de données de réseau (38) est adapté pour relier le lieu dudit événement, en tant que noeud de lieu d'occurrence de l'évènement ayant des informations de position, auxdites données de réseau de recherche d'itinéraire (35), pour enregistrer ledit événement en tant que noeud virtuel d'événement n'ayant pas des informations de position, et pour établir une connexion du noeud du lieu d'occurrence de l'événement au noeud virtuel d'événement en utilisant une pluralité de liens basés sur différentes heures d'un événement ; et
ledit moyen de recherche d'itinéraire (33) est adapté pour rechercher un itinéraire de guidage à partir dudit point de départ en utilisant le noeud virtuel d'événement correspondant, enregistré par le moyen d'édition de données de réseau (38), en tant que destination et adapté pour fournir audit dispositif terminal (20) un guidage vers un événement correspondant et le lieu de l'événement dans le cas où un événement spécifique est spécifié parmi lesdits événements en utilisant un point désiré comme point de départ et une recherche d'itinéraire est demandée.

8. Serveur de recherche d'itinéraire (30) selon la revendication 7, **caractérisé en ce que** ledit moyen de recherche d'itinéraire (33) est adapté pour rechercher un itinéraire optimal ou une pluralité d'itinéraires candidats comportant l'itinéraire optimal en tant qu'itinéraire de guidage dudit point de départ à un noeud virtuel d'événement, qui est la destination.

9. Serveur de recherche d'itinéraire (30) selon la revendication 7, **caractérisé en ce qu'**un lien basé sur l'heure dudit événement est exprimé dans un format d'une grille horaire de transport indiquant le départ à partir du noeud du lieu d'occurrence de l'événement à l'heure de début de l'événement et l'arrivée au noeud virtuel d'événement à l'heure de fin de l'événement.

10. Serveur de recherche d'itinéraire (30) selon la revendication 7, **caractérisé en ce que** le serveur de recherche d'itinéraire est adapté pour acquérir lesdites données d'événement (39) à partir d'un serveur (50) fournissant des informations d'événement pour fournir des informations relatives à un événement correspondant via un réseau.

11. Serveur de recherche d'itinéraire (30) selon la revendication 7, **caractérisé en ce que**
ledit moyen d'édition de données de réseau (38) est adapté pour enregistrer la catégorie dudit événement en tant que noeud virtuel de catégorie n'ayant pas des informations de position, et pour établir une connexion du noeud virtuel d'événement au noeud virtuel de catégorie en utilisant un lien ayant un coût fixe, ledit événement étant placé dans une catégorie ; et
ledit moyen de recherche d'itinéraire (33) est adapté pour rechercher un itinéraire de guidage à partir dudit point de départ en utilisant le noeud virtuel de catégorie en tant que ladite destination et pour fournir un guidage vers un événement correspondant et le lieu de l'événement dans le cas où une catégorie spécifique est spécifiée parmi lesdites catégories en utilisant un point désiré comme point de départ et une recherche d'itinéraire est demandée.

12. Serveur de recherche d'itinéraire selon la revendication 11, **caractérisé en ce que** ledit moyen de recherche d'itinéraire (33) est adapté pour rechercher un itinéraire optimal ou une pluralité d'itinéraires candidats comportant l'itinéraire optimal en tant qu'itinéraire de guidage dudit point de départ à un noeud virtuel de catégorie, qui est la destination, et pour fournir un guidage vers un événement correspondant et le lieu de l'événement.

13. Procédé de recherche d'itinéraire dans un système de recherche d'itinéraire permettant de définir un point de départ désiré et de rechercher un itinéraire pour participer à un événement du même type ayant lieu dans une pluralité d'emplacements et dans une pluralité de périodes, le procédé de recherche d'itinéraire étant **caractérisé en ce que**
ledit système de recherche d'itinéraire comprend une base de données stockant des données de réseau de recherche d'itinéraire (35) pour rechercher un itinéraire qui utilise des chemins pédestres et des équipement de transport, un moyen de recherche d'itinéraire (33), un moyen d'édition de données de réseau (38) et une base de données stockant des données d'événement (39) comportant le lieu et l'heure dudit événement ;
ledit moyen d'édition de données de réseau (38), reliant le lieu dudit événement, en tant que noeud de lieu d'occurrence de l'évènement ayant des informations de position, auxdites données de réseau de recherche d'itinéraire (35), enregistrant chacun desdits événements en tant que noeud virtuel d'événement n'ayant pas des informations de position et établissant une connexion du noeud du lieu d'occurrence de l'évènement au noeud virtuel d'événement en utilisant une pluralité de liens basés sur différentes heures d'un événement ;
ledit moyen de recherche d'itinéraire (33), recherchant un itinéraire de guidage à partir dudit point de départ en utilisant le noeud virtuel d'événement, enregistré par le moyen d'édition de données de réseau (38), en tant que ladite destination dans le cas où un événement spécifique est spécifié parmi lesdits événements en utilisant un point désiré comme point de départ ; et
fournissant un guidage vers un événement correspondant et le lieu de l'événement.

14. Procédé de recherche d'itinéraire selon la revendication 13, **caractérisé en ce que** la recherche d'un itinéraire de guidage comporte un traitement permettant de rechercher un itinéraire optimal ou une pluralité d'itinéraires candidats comportant l'itinéraire optimal dudit point de départ à un noeud virtuel d'événement, qui est la destination.

15. Procédé de recherche d'itinéraire selon la revendication 13, **caractérisé en ce qu'**il comprend en outre les étapes qui consistent :
à enregistrer, par le biais dudit moyen d'édition de données de réseau (38), la catégorie dudit événement en tant que noeud virtuel de catégorie n'ayant pas des informations de position, et à établir une connexion du noeud virtuel d'événement au noeud virtuel de catégorie en utilisant un lien ayant un coût fixe, ledit événement étant placé dans une catégorie ;
à rechercher, par le biais dudit moyen de recherche d'itinéraire (33), un itinéraire de guidage à partir dudit point de départ en utilisant le noeud virtuel de catégorie en tant que ladite destination dans le cas où une catégorie spécifique est spécifiée parmi lesdites catégories en utilisant un point désiré comme point de départ et une recherche d'itinéraire est demandée.

16. Procédé de recherche d'itinéraire selon la revendication 15, **caractérisé en ce que** la recherche d'un itinéraire de guidage comporte un traitement permettant de rechercher un itinéraire optimal ou une pluralité d'itinéraires candidats comportant l'itinéraire optimal dudit point de départ à un noeud virtuel d'événement, qui est ladite destination.

17. Dispositif terminal (20) adapté pour rechercher un itinéraire pour participer à un événement du même type ayant lieu dans une pluralité d'emplacements et dans une pluralité de périodes, et qui comprend une base de données stockant des données de réseau de recherche d'itinéraire (35), un moyen de recherche d'itinéraire, un moyen d'édition de données de réseau (38) et une base de données stockant des données d'événement (39) comportant le lieu et l'heure dudit événement, **caractérisé en ce que**
ledit moyen d'édition de données de réseau (38) est adapté pour relier le lieu dudit événement, en tant que noeud de lieu d'occurrence de l'évènement ayant des informations de position, auxdites données de réseau de recherche d'itinéraire (35), pour enregistrer ledit événement en tant que noeud virtuel d'événement n'ayant pas des informations de position, et pour établir une connexion du noeud du lieu d'occurrence de l'évènement au noeud virtuel d'événement en utilisant une pluralité de connexions basées sur différentes heures d'un événement ; et
ledit moyen de recherche d'itinéraire est adapté pour se connecter, via un réseau, à un serveur de recherche d'itinéraire (30) pour rechercher un itinéraire de guidage à partir dudit point de départ en utilisant le noeud virtuel d'événement correspondant, enregistré par le moyen d'édition de données de réseau (38), en tant que ladite destination et pour fournir le guidage dans le cas où un point de départ et un événement spécifique sont spécifiés à partir d'un dispositif terminal (20) parmi lesdits événements et une recherche d'itinéraire est demandée, le dispositif terminal dans lequel
ledit dispositif terminal (20) est pourvu d'un moyen adapté pour spécifier un point de départ désiré et un évènement et pour envoyer une demande de recherche d'itinéraire audit serveur de recherche d'itinéraire.

18. Dispositif terminal selon la revendication 17, dans lequel ledit moyen d'édition de données de réseau (38) est adapté pour enregistrer la catégorie dudit événement en tant que noeud virtuel de catégorie n'ayant pas des informations de position, et pour établir une connexion du noeud virtuel d'événement au noeud virtuel de catégorie en utilisant un lien ayant un coût fixe, ledit événement étant placé dans une catégorie, ledit moyen de recherche d'itinéraire est adapté pour se connecter à un serveur de recherche d'itinéraire pour rechercher un itinéraire de guidage à partir dudit point de départ en utilisant le noeud virtuel de catégorie correspondant en tant que ladite destination, le dispositif terminal (20) dans lequel.
ledit dispositif terminal (20) est en outre pourvu d'un moyen adapté pour spécifier un point de départ désiré et une catégorie et pour envoyer une demande de recherche d'itinéraire audit serveur de recherche d'itinéraire (30).
